# EUROPEAN PATENT APPLICATION

(11) **EP 0 551 694 A1**
(43) Date of publication of application: **21.07.1993**
(21) Application number: 92300333.9
(22) Date of filing: 15.01.1992
(51) Int. Cl.: H04N 5/92, H04N 5/93, H04N 5/783

(54) **Method of recording a digital video signal**

(71) Applicant: MATSUSHITA ELECTRIC INDUSTRIAL CO., LTD., Kadoma-shi, Osaka-fu, 571 (JP)
(72) Inventor: Otaka, Hideki, Neyagawa-shi, Osaka-fu 572 (JP); Ide, Akifumi, Kawanishi-shi, Hyogo-ken 666-01 (JP); Iketani, Akira, Higashiosaka-shi, Osaka-fu 577 (JP); Nishino, Masakazu, Kashiwara-shi, Osaka-fu 582 (JP); Juri, Tatsuro, Osaka-shi, Osaka-fu 534 (JP); Matsumi, Chiyoko, Suita-shi, Osaka-fu 565 (JP)
(74) Representative: Crawford, Andrew Birkby

(57) **Abstract**

In recording the high efficiency coded form of a video signal into sync blocks of a recording tape, less significant data of the video signal which are not critical for reproduction of an image are recorded into one or more of the sync blocks separately of significant data. Hence, when primary sync blocks carrying the significant data are retrieved particularly at a high-speed playback mode, the image will be reproduced.

## Description

The present invention relates to a method of recording a digital signal allocated to sync blocks which serve as recording units.

In common, a video signal which contains a large amount of data is processed by a bit rate reduction technique for reduction of the redundant data prior to being recorded into a digital record/playback apparatus such as a digital VTR. Among such known bit rate reduction techniques is an orthogonal transformation coding, e.g. Hadamard transformation or discrete cosine transformation (DCT). The orthogonal transformation coding has steps of dividing an input video signal into blocks, frequency dividing the data of each block, and encoding frequency components to their cord forms.

In recording such compressed code data into a digital VTR, a given amount of the data is designated as a recording unit. The recording unit is now referred to as a sync block. The sync block is consisted mainly of a sync pattern, an identification information (ID) containing address information on data location on a screen, and a compressed code data. The sync blocks are recorded in a series onto tracks of a recording tape. Each track corresponds to a tracing path of a recording head at recording action and also, to a scanning line of a playback head at playback action. In the playback action, the scanning of the playback head along the recording path of the recording head performs reproduction of the video signal data stored in the sync blocks.

A signal reproducing manner with a recording tape running at a high speed will be explained. The traveling speed of the recording tape is higher in a high speed playback mode than in a normal playback mode and thus, the scanning of the playback head goes across a plurality of the tracks. Hence, it is hard to scan and read all the sync blocks of each track and limited data of the sync blocks extending across the scanning line of the playback head can only be retrieved.

Such a known digital signal recording method has a critical drawback. It is assumed that a digital data divided into an m number of blocks is compressed and encoded to code signals which are then allocated to an n number of sync blocks for storage. In practice, although an appropriate operating speed is predetermined for allowing the head to read the n sync blocks along one track in theory, the head tends to deviate from its ideal scanning line thus causing some of the n sync blocks to remain unretrieved. For example, if a j number out of the n sync blocks remain unretrieved, their data contents cannot be decoded. More specifically, the m blocks of data which should be reproduced on a screen at optimum will hardly be scanned in completeness for decoding and reproduction during actual playback operation, thus remaining unretrieved from location to location.

It is an object of the present invention to provide a method of recording a digital signal so that at a high-speed playback operation, a large area can be reproduced on a screen from the data of particular sync blocks retrieved from one single track.

For achievement of the foregoing object, a digital signal recording method according to the present invention is adapted comprising the steps of dividing the input video signal into an m number of blocks, and recording its high efficiency coded data of the m blocks into an n number of sync blocks, in which less significant portions of the m block data are in entirety allocated into one or more of the n sync blocks.

Also, another digital signal recording method of the present invention is provided comprising the steps of dividing the input video signal into an m number of blocks, and recording its high efficiency or orthogonal transformation coded data of the m blocks into an n number of sync blocks, in which additional coding information needed for decoding the m block data and low-frequency components of the m block data are allocated to each of an i number-from the front end-of the sync blocks.

Accordingly, when particular ones of the n sync blocks which carry the coding information needed for decoding the m block data and the low-frequency components of the m block data of the video signal, are retrieved during the high-speed playback operation, essential portions of the m block data can be reproduced for developing an image on a screen.
Fig.1 is an explanatory view showing a string of data and a row of sync blocks designated by a method of recording a digital signal according to a first embodiment of the present invention;
Fig.2 is an explanatory view showing a sequence of encoding AC components of the orthogonal transformed signal;
Fig.3 is an explanatory view showing the tracing of a read head during a normal playback mode operation;
Fig.4 is an explanatory view showing the tracing of the read head across the row of the sync blocks during a high-speed playback mode operation;
Fig.5 is an explanatory view showing a string of data and a row of sync blocks designated by a method of recording a digital signal according to a second embodiment of the present invention;
Fig.6 is an explanatory view showing the tracing of the read head across the row of the sync blocks during a high-speed playback mode operation in the second embodiment;
Fig.7 is an explanatory view showing a string of data and a row of sync blocks designated by a method of recording a digital signal according to a third embodiment of the present invention;
Fig.8 is an explanatory view showing the AC components are less in amount;
Fig.9 is a block diagram of an arrangement for execution of the digital signal recording methods of the present invention; and
Fig. 10 is a block diagram of a data rearranger shown in Fig. 9.

Preferred embodiments of the present invention will be described referring to the accompanying drawings. The description of like components denoted by like numerals throughout the drawings will not be repeated.

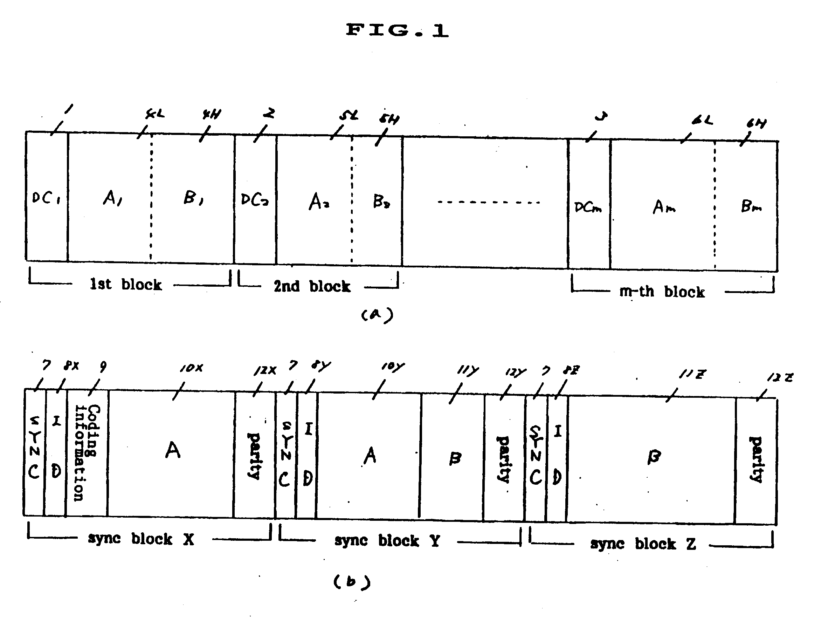

Fig.1 illustrates a first embodiment showing a digital signal recording method in which orthogonal transformation coded data are allocated into sync blocks. More particularly, m data blocks of a digital signal are orthogonal transformed and converted to code forms which are then allocated to three, x, y, and z, sync blocks. Fig.1-a shows an arrangement of the orthogonal transformation coded data in an m number of the blocks, in which represented by the numerals 1, 2 and 3 are DC components of the block data and 4, 5, and 6 are AC components. In more detail, an i number of the AC components (low frequency data) from the front end are specifically denoted by 4L, 5L, and 6L (namely, A1 to Am) and the remaining (or high frequency data) after the (i+1)-th data are denoted by 4H, 5H, and 6H (B1 to Bm). Fig.1-b shows an arrangement of the sync blocks in which there are assigned SYNC fields 7, ID fields 8x, 8y, 8z, a coding information field 9 needed for decoding the m blocks, low-frequency data fields 10x, 10y carrying the DC components and the low-frequency data (A1 to Am) of the AC components of the m blocks shown in Fig.1-a, high-frequency data fields 11y, 11z carrying the high-frequency data (B1 to Bm) of the AC components of the same shown in Fig.1-a, and parity check fields 12x, 12y, 12z for error correction.

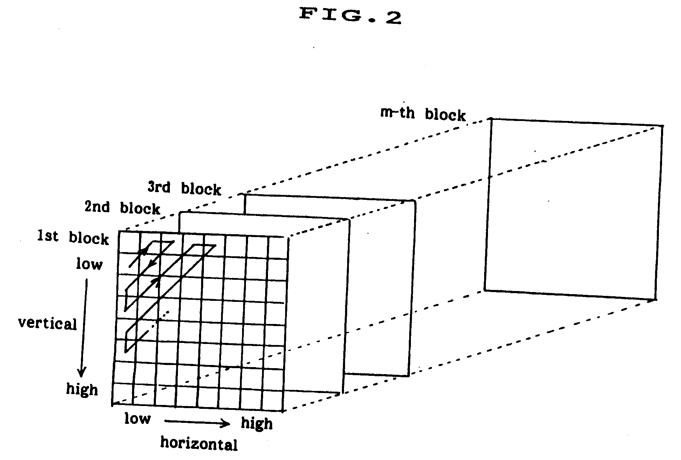

In action, the AC components of each block which have been orthogonal transformed are converted into code forms through scanning from the low-frequency end by such a manner as shown in Fig.2. The AC components of the block shown in Fig.1-a are aligned after the DC component field. Hence, the coding information data of m blocks, the DC components, and the low-frequency data of the AC components from the first block to the m-th block are allocated in succession to the two fields 10x and 10y of their respective sync blocks x, y. Also, the high-frequency data of the AC components from the first block to the m-th block arc allocated to the two fields 11y and 11z of their respective sync blocks y, z. Accordingly, the high-frequency data are stored in the rear half of the three sync blocks.

The operation in a high-speed playback mode will now be explained for retrieving the data from such sync blocks. It should be understood that data of each sync block can completely be read out when the center of a read head runs across the full length of the sync block.

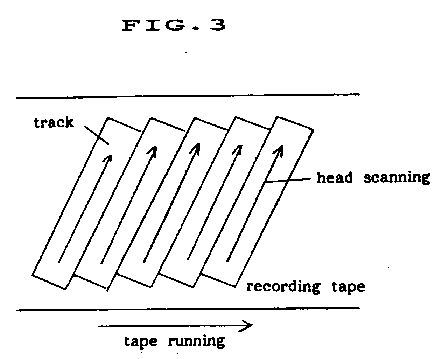

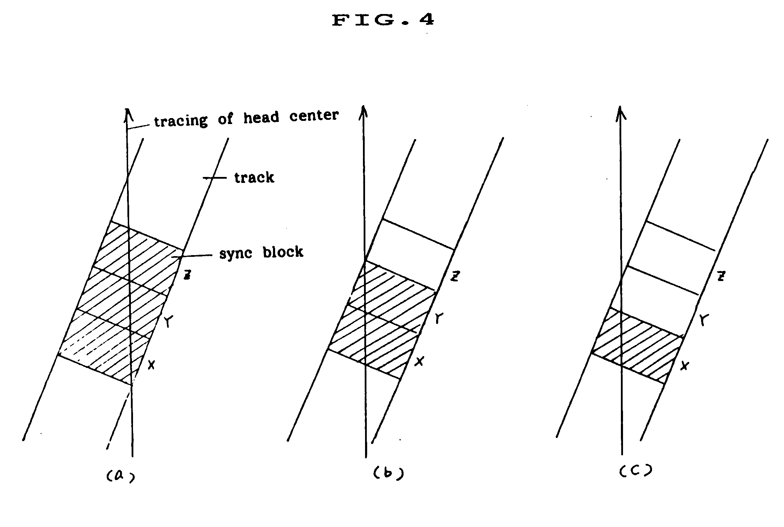

During playback operation in a normal mode, the read head scans the same path as in the recording operation, as best shown in Fig.3-a and will thus read all the sync blocks x, y, and z. At the high-speed playback mode, the read head scans across several tracks and will thus skip and cause some sync blocks to remain not retrieved. Figs.4-a, 4-b, and 4-c illustrate that data can be retrieved from all, x and y, and x of the three sync blocks respectively.

The sync block x carries the information needed for decoding and the low-frequency data of the m blocks and when it is successfully scanned, the low-frequency data of the m blocks will completely be reproduced on a screen. In addition, when the sync block y is scanned, its high-frequency data will be reproduced providing higher resolution.

As set forth above, the method of the first embodiment allows at least one of the three sync blocks, which carries the coding information and the low-frequency data of an orthogonal transformed signal, to be retrieved during the high-speed playback operation so that data of the entire m blocks can be reproduced on a screen although their high-frequency components are lost.

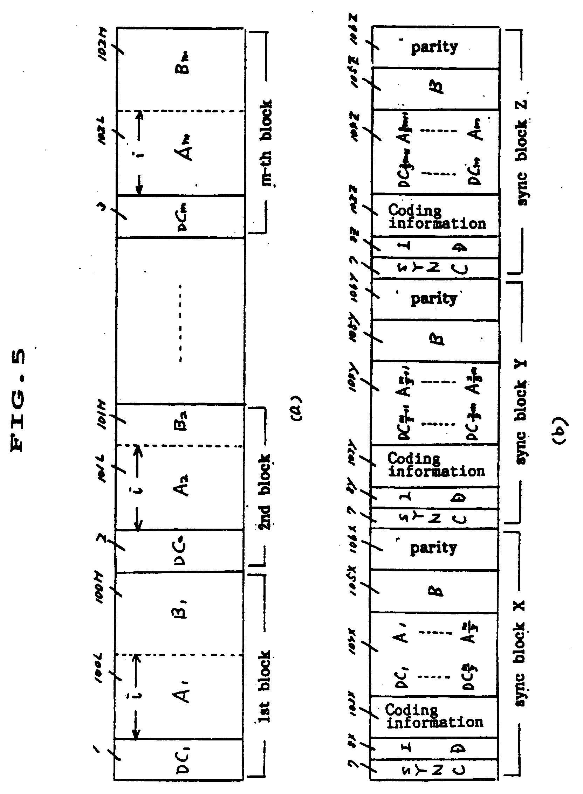

Fig.5 illustrates that the orthogonal transformation coded data are allocated to sync blocks by another digital signal recording method, denoting a second embodiment of the present invention. As shown, coded data of the m blocks which have been orthogonal transformed are allocated to three, x, y, and z, sync blocks. Fig.5-a shows an arrangement of the orthogonal transformation coded data in the m blocks, in which represented by the numerals 100, 101 and 102 are DC components of the block data. AC components of the same are denoted from the first to the i-th (in a low-frequency data) by 100L, 101L, and 012L (namely, A1 to Am) and from the (i+1)-th to the last (in a high-frequency data) by 100H, 101H, and 102H (B1 to Bm). Fig.5-b shows an arrangement of the three sync blocks x, y, and z in which there are assigned three coding information fields 103x, 103y, and 103z needed for decoding a first, a second, and a third m/3 portion of the data of the m blocks respectively, a low-frequency data field 104x carrying the DC components (DC1 to DCm/3) and the low-frequency portion (A1 to Am/3) of the AC components of the first m/3 block data, another low-frequency data field 104y carrying the DC components (DCm/3+1 to DC2m/3) and the low-frequency portion (Am/3+1 to A2m/3) of the AC components of the second m/3 block data, and a further low-frequency data field 104z carrying the DC components (DC2m/3+1 to DCm) and the low-frequency portion (A2m/3+1 to Am) of the AC components of the third m/3 block data. Also, shown are high-frequency data fields 105x, 105y, 105z carrying the high-frequency components of the m blocks and parity check fields 106x, 106y, 106z for error correction.

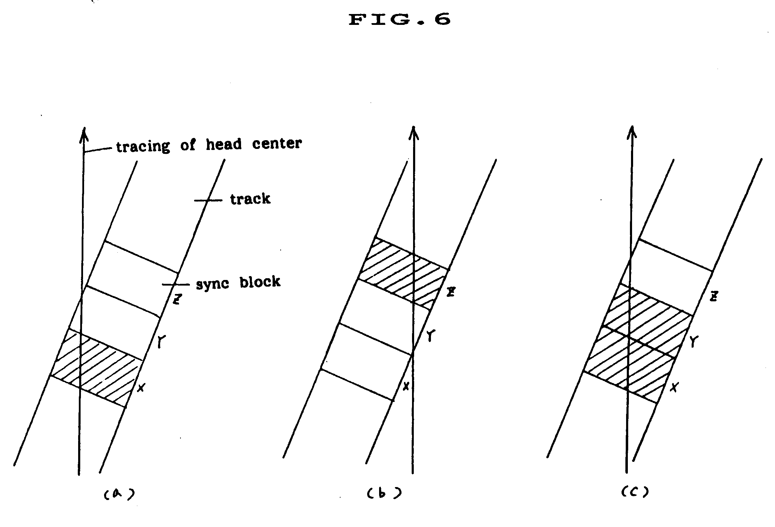

In action, the AC components of each block which have been orthogonal transformed are converted into code forms through scanning from the low-frequency end by such a manner as shown in Fig.2. The sync block x is then loaded with the coding information data, DC components, and an i number-from the front end-of the AC components of the first m/3 of the m block data. Similarly, the other sync blocks y and z are loaded with the coding information data, DC components, and an i number of the second and third m/3 of the m block data respectively. Then, the high-frequency portions of the AC components of the m block data are allocated to the remaining regions of the three sync blocks x, y, z. Hence, the high-frequency data which are not critically essential in developing an image, are stored in the rear half of the three sync blocks. According to the present invention, at least one of the three sync blocks can be scanned as shown in Fig.6-a or 6-b, thus reproducing 1/3 of the m block data. Also, when two of the sync blocks are scanned successfully as shown in Fig.6-c, 2/3 of the m block data will be reproduced on a screen. The high-frequency data of a block may be lost when not loaded into the same sync block as of its low-frequency data. However, this will be negligible for reproducing an image of high-speed playback mode quality.

As set forth above, the method of the second embodiment allows an image to be reproduced on a screen from the data of corresponding blocks even if not all the three sync blocks is scanned during the high-speed playback operation.

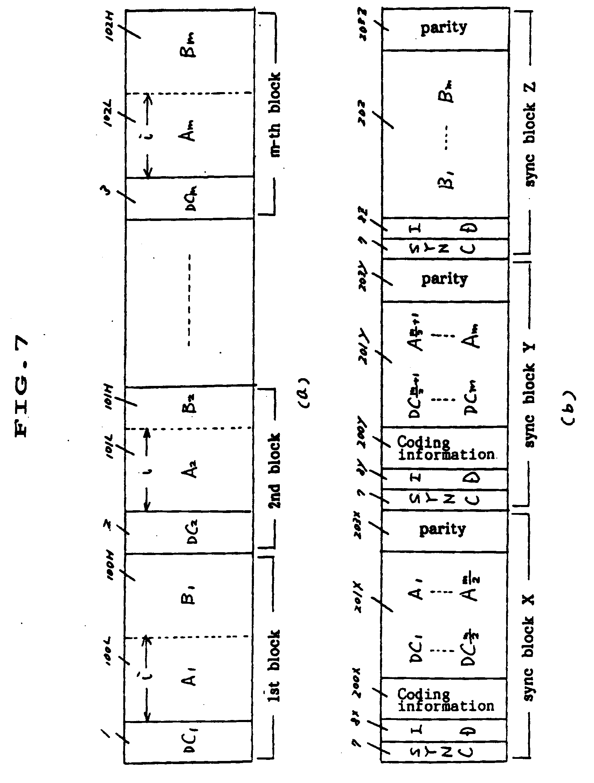

Fig.7 illustrates that the orthogonal transformation coded data are allocated to sync blocks by another digital signal recording method, denoting a third embodiment of the present invention. As shown, coded data of the m blocks which have been orthogonal transformed are allocated to three, x, y, and z, sync blocks. Fig.7-a is similar to Fig.5-a, showing an arrangement of the orthogonal transformation coded data in the m blocks. Fig.7-b shows an arrangement of the three sync blocks x, y, and z in which there are assigned two coding information fields 200x and 200y needed for decoding a first and a second half of the m block data respectively, a low-frequency data field 201x carrying the DC components (DC1 to DCm/2) and the low-frequency portion (A1 to Am/2) of the AC components of the first m/2 block data, and another low-frequency data field 201y carrying the DC components (DCm/2+1 to DCm) and the low-frequency portion (Am/2+1 to Am) of the AC components of the second m/2 block data. Also, shown are a high-frequency data field 202 carrying the high-frequency components of the m block data and three parity check fields 203x, 203y, 203z for error correction.

In action, the AC components of each block which have been orthogonal transformed are converted into code forms through scanning from the low-frequency component by such a manner as shown in Fig.2. The sync block x is then loaded with the coding information data, DC components, and an i number-from the front end-of the AC components of the first m/2 of the m block data. Similarly, the sync block y is loaded with the coding information data, DC components, and an i number of the second m/2 of the m block data. The sync block z is now loaded with the remaining or high-frequency portion of the AC components of the m block data. Hence, the coding information data, the DC components, and the low-frequency portion of the AC components which are essential in developing a reproduction image, are stored in the two front-end sync blocks. According to the present invention, the sync block x upon being scanned can provide reproduction of a first half of the m block data on a screen. Equally, the sync block y can provide reproduction of a second half of the m block data.

As set forth above, the method of the third embodiment allows one or two of the three sync blocks, which carry the coding information and the low-frequency data of an orthogonal transformed signal, to be retrieved during the high-speed playback operation so that a half or all of the m block data can be reproduced on a screen although their high-frequency components are lost.

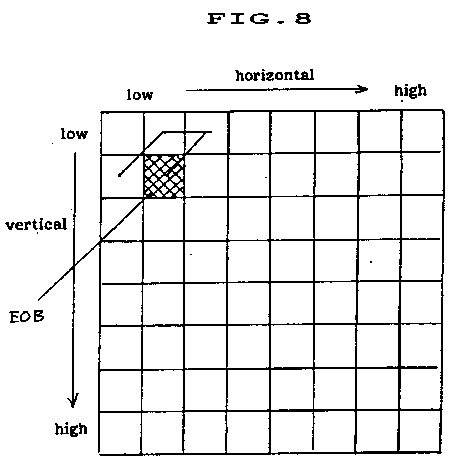

It may happen that the amount of AC component data in the embodiments is less than a predetermined value as shown in Fig.8. For compensation, a delimiter indicating the end of a block (EOB) is accompanied with the low-frequency data of the block or an indicator for indicating a range to be coded in each block is added to the coding information data.

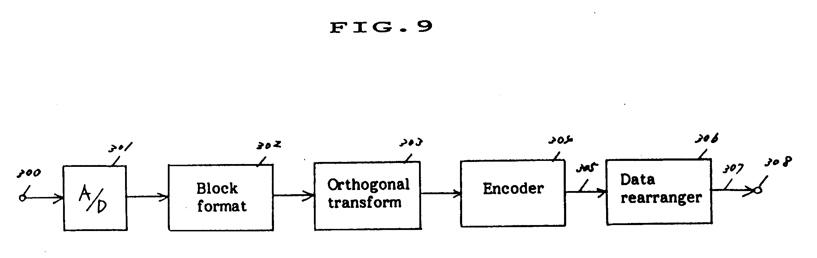

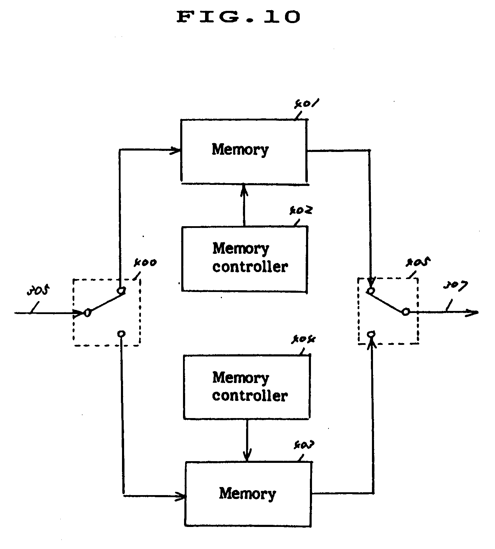

Fig.9 is a block diagram showing an apparatus for performing the foregoing methods, in which denoted are a video signal input terminal 300, an A/D converter 301 for converting an input video signal into its digital form, a block formatter 302 for producing two-dimensional blocks of data, an orthogonal transformer 303, an encoder 304, a coded data 305, a data rearranger 306, a rearranged data 307, and a data output terminal 308. In particular, the data encoded by the encoder 304 is rearranged in order at the data rearranger 306. Fig. 10 shows an arrangement of the rearranger 306 comprising a selector switch 400 for selecting a memory for writing, a memory 401 for storage of DC components and low-frequency data of AC components, a memory controller 402 for controlling the memory 401, another memory 403 for storage of high-frequency data of AC components, a memory controller 404 for controlling the memory 403, and a selector switch 405 for selecting a memory for reading. In write operation, the coded data 305 of each block is recorded its DC components and a low-frequency portion of its AC components to the memory 401 and a high-frequency portion of the AC components to the memory 403 by control of the switch 400. For reading, the switch 405 is controlled for selection of the memories so that the contents of the data are retrieved and allocated into the three sync blocks x, y, z in such an order as described in the foregoing embodiment.

It should be understood that the present invention is not limited to the number of data blocks and sync blocks and their relations to each other described in the embodiments. The number of the data and/or sync blocks will arbitrarily be determined and for example, both the blocks may be identical in the number.

## Claims

1. A method of recording a digital signal comprising the steps of:
dividing the input video signal into an m number of blocks; and
recording its high efficiency coded data of the m blocks into an n number of sync blocks, in which less significant portions of the m block data are in entirety allocated into a region of the n sync blocks.

2. A method of recording a digital signal according to Claim 1, wherein the high efficiency encoding of the data is executed by an orthogonal transformation technique.

3. A method of recording a digital signal according to Claim 1 or 2, wherein the less significant data are equivalent to high-frequency portions of the m block data divided from the input video signal.

4. A method of recording a digital signal according to Claim 1, 2, or 3, wherein the less significant data are allocated into a k number out of the n sync blocks for recording.

5. A method of recording a digital signal according to Claim 1, 2, or 3, wherein the less significant data are allocated into a region of each of the n sync blocks.

6. A method of recording a digital signal comprising the steps of:
dividing the input video signal into an m number of blocks; and
recording its high efficiency coded data of the m blocks into an n number of sync blocks, in which additional coding information needed for decoding the m block data and low-frequency components of the m block data are allocated to each of an i number-from the front end-of the sync blocks.

7. A method of recording a digital signal according to Claim 6, wherein the high efficiency encoding of the data is executed by an orthogonal transformation technique.
